(19) Europäisches Patentamt / European Patent Office / Office européen des brevets

(11) **EP 4 339 487 B1**

(12) **EUROPÄISCHE PATENTSCHRIFT**

(45) Veröffentlichungstag und Bekanntmachung des Hinweises auf die Patenterteilung:
**18.02.2026  Patentblatt 2026/08**

(21) Anmeldenummer: **22196180.8**

(22) Anmeldetag: **16.09.2022**

(51) Internationale Patentklassifikation (IPC):
*F16H 55/06* *(2006.01)*      *F16H 55/08* *(2006.01)*
*F16H 55/22* *(2006.01)*

(52) Gemeinsame Patentklassifikation (CPC):
**F16H 55/06; F16H 55/0853; F16H 55/22;**
F16H 55/0873; F16H 2055/065

(54) **ZAHNRAD**

GEAR

ROUE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.03.2024  Patentblatt 2024/12**

(73) Patentinhaber: **IMS Gear SE & Co. KGaA**
**78166 Donaueschingen (DE)**

(72) Erfinder:
• **SÜSS, Marius**
**78176 Blumberg (DE)**
• **BIRK, Sebastian**
**78647 Trossingen (DE)**
• **KNÖPFLE, Michael**
**78183 Hüfingen (DE)**
• **SCHACHTSCHNEIDER, Paul**
**78054 Villingen-Schwenningen (DE)**
• **STOPPEL, Eugen**
**78357 Mühlingen (DE)**
• **DOLD, Michael**
**78199 Bräunlingen (DE)**

(74) Vertreter: **Westphal, Mussgnug & Partner Patentanwälte mbB**
**Am Riettor 5**
**78048 Villingen-Schwenningen (DE)**

(56) Entgegenhaltungen:
DE-A1- 102016 104 915      US-A1- 2015 047 448
US-A1- 2017 166 239      US-A1- 2018 180 155

EP 4 339 487 B1

**Beschreibung**

Die Erfindung betrifft ein Zahnrad, welches aus Kunststoff gebildet ist, und die Merkmale des Oberbegriffs des Anspruchs 1 aufweist.

Beispiele für aus Kunststoff hergestellte, einteilige Zahnräder sind aus DE 10 2017 201 383 A1, DE 202 22 502 U1, US2002/0029648 A1 sowie US 6,070,484 hinlänglich bekannt. Die Zahnräder verfügen über eine Außenverzahnung, welche um eine mittige Rotationsachse herum angeordnet ist. Mittig verfügt das Zahnrad über eine Aufnahmeöffnung zur Aufnahme einer Achse oder Welle, wobei ein Zwischenabschnitt diese Aufnahmeöffnung mit der Außenverzahnung einstückig verbindet. Diese bekannten Zahnräder weisen eine sogenannte Geradverzahnung auf, d.h., dass die Zähne der Außenverzahnung parallel zur Rotationsachse des Zahnrades ausgerichtet sind. Problematisch sind solche Geradverzahnungen hinsichtlich ihrer Laufruhe und der Geräuschentwicklung.

Darüber hinaus sind auch sogenannte Mehrkomponentenzahnräder bekannt, die aus unterschiedlichen Materialien, z.B. unterschiedlichen Kunststoffen, und Teilen zusammengesetzt sind.

Insbesondere bei Anwendungen in Hilfsantrieben von Kraftfahrzeugen, wie z.B. elektrische Lenkungen, elektrische Sitzverstellungen oder elektromechanischen Bremsen, kommen solche Zahnräder zunehmend in Einsatz. Dabei ist es unerlässlich, dass diese Zahnräder hohen Festigkeitsanforderungen entsprechen, aber gleichzeitig auch klein bauen und im Betrieb eine geringe Geräuschentwicklung aufweisen.

Im Kraftfahrzeugbau allgemein, aber auch insbesondere bei der Realisierung von elektromechanischen Bremsen, elektrischen Lenkungen und elektrischen Sitzverstellungen, besteht das Bedürfnis, gewichtssparende und auch platzsparende Kraftfahrzeugkomponenten unter Verwendung von Zahnrädern herzustellen, die zu einer geringen Geräuschentwicklung im Betrieb dieser Kraftfahrzeugkomponenten beitragen. Daneben besteht aufgrund des zunehmenden Kostendrucks die Forderung, möglichst kostengünstig solche für die Fahrzeuge notwendigen Komponenten herzustellen.

Weitere Zahnräder sind aus der DE 10 2016 104 915 A1, der US 2017/166239 A1, der US 2018/180155 A1 und der US 2015/047448 A1 bekannt. Dabei offenbart die DE 10 2016 104 915 A1 die Merkmale des Oberbegriffs des Anspruchs 1.

Hier setzt die vorliegende Erfindung an.

Die Erfindung hat das Ziel, die eingangs genannten aus Kunststoff bestehenden Zahnräder, insbesondere für die Anwendung in einem Hilfsantrieb eines Kraftfahrzeuges, derart weiterzubilden, dass diese einen geringen Bauraum aufweist, kostengünstig herzustellen sind und zusätzlich die notwendigen Festigkeitserfordernisse erfüllen. Trotzdem soll sich ein solches Zahnrad durch eine geringe Geräuschentwicklung und eine hohe Laufruhe auszeichnen.

Dieses Ziel wird durch ein Zahnrad mit den Merkmalen des Anspruchs 1 realisiert. Weiterbildungen eines solchen Zahnrades sind Gegenstand der Unteransprüche.

Das erfindungsgemäße Zahnrad hat eine Zahnradkörper aus einem ersten Kunststoffmaterial, wobei der Zahnradkörper

- eine (gedachte) Rotationsachse,
- eine um die Rotationsachse angeordnete Außenverzahnung,
- eine zentrisch, (also konzentrisch zur gedachten Rotationsachse) angeordneten, insbesondere zylindrischen Aufnahmeöffnung, und
- einen zwischen der Außenverzahnung und der Wand der Aufnahmeöffnung angeordneten Zwischenabschnitt

aufweist.

Der Vollständigkeit halber wird angemerkt, dass die Rotationsachse eine gedachte Achse ist, auf die zur Definition geometrischer Merkmale des Zahnrads verwendet wird. Es handelt sich also nicht um einen physikalisch vorhandenen Achsabschnitt, der am Zahnrad angeordnet ist.

Erfindungsgemäß ist der Zahnradkörper feststehend an einem zumindest teilweise im Zwischenabschnitt angeordneten Stützkörper aus einem zweiten Kunststoffmaterial, welches eine höhere Steifigkeit und eine geringere Elastizität als das erste Kunststoffmaterial aufweist, angeformt, und zwar so dass Oberflächenabschnitte der Außenverzahnung, der Wand der Aufnahmeöffnung, des Zwischenabschnitts und des Stützkörpers eine im Wesentlichen ebene Stirnfläche des Zahnrads bilden.

Die Stirnfläche des Zahnrads ist dabei eine Fläche, die durch die senkrecht zur Rotationsachse des Zahnrads stehenden Oberflächenabschnitte, die das Zahnrad in einer der beiden axialen Richtungen begrenzen, gebildet wird.

Unter den Begriff "im Wesentlichen ebenen Stirnfläche" fallen dabei neben ebenen Stirnflächen, bei denen es keinerlei messbaren Höhenversatz, insbesondere keinen messbaren Höhenversatz zwischen zu der Stirnfläche beitragenden Oberflächenabschnitten benachbarter Komponenten des Zahnrads gibt und diese Oberflächenabschnitte exakt parallel zueinander ausgerichtet sind, auch Stirnflächen, bei denen es zu einem geringen Höhenversatz, insbesondere zur Bildung von Stufen, kommt, der eine Höhe von etwa 1mm nicht überschreitet und/oder bei denen benachbarte Oberflächenabschnitte leicht, beispielsweise um 1 bis 2 Grad, verkippt zueinander verlaufen. Derartige Abweichungen können beispielsweise bei einer Fertigung in 2K-Technik auftreten, weil das zweite Material, das dem Werkzeug zugefügt wird, etwas zurückschwindet. Wenn eine Stufe vorhanden ist, ist es bevorzugt, wenn der durch diese Stufe gebildete "höhere" Bereich aus einem gleitoptimierten Kunststoffmaterial oder Thermoplast, insbesondere Polyoxymethylen (POM) besteht.

Erfindungsgemäß weist der Stützkörper zudem Verstärkungsabschnitte für Zähne der Außenverzahnung auf.

Wesentliche Vorteile hinsichtlich der Geräuschentwicklung werden dadurch erreicht, dass die Außenverzahnung erfindungsgemäß eine Schrägverzahnung mit Zähnen, die zumindest abschnittsweise unter einem Schrägungswinkel zur Rotationsachse verlaufen ist; um zugleich die benötigte Festigkeit für diese Verzahnung bei einem klein bauenden Zahnrad zu erreichen ist darüber hinaus erfindungsgemäß vorgesehen, dass mindestens ein Teil der Verstärkungsabschnitte zumindest abschnittsweise unter einem Winkel verläuft, der mindestens annähernd dem Schrägungswinkel der Schrägverzahnung entspricht.

Insbesondere ist es bevorzugt, wenn dieser Abschnitt der Verstärkungsabschnitte derjenige ist, der den Zähnen der Verzahnung am nächsten und somit von der Rotationsachse des Zahnrads am weitesten beabstandet ist.

Als besonders geeignete zweite Kunststoffmaterialien haben sich ein glasfaser-, aramidfaser oder kohlefaserverstärktes Kunststoffmaterial oder ein glaskugel- oder mineralgefülltes Kunststoffmaterial, insbesondere ein derart verstärktes oder gefülltes Polyphenylensulfid (PPS) erwiesen.

Besonders bewährt hat sich ferner, wenn das erste Kunststoffmaterial ein gleitoptimiertes Kunststoffmaterial oder Thermoplast, insbesondere Polyoxymethylen (POM), ist.

Obwohl es grundsätzlich möglich ist, ein solches Zahnrad derart herzustellen, dass der Winkel V, unter dem zumindest Teile der Verstärkungsabschnitte verlaufen, genau oder zumindest ziemlich genau dem Schrägungswinkel W der Außenverzahnung entspricht, ist es in einer Weiterbildung der Erfindung vorgesehen, dass der Winkel V kleiner gewählt wird als der Schrägungswinkel W. Die Erfindung sieht dabei insbesondere vor, dass der Winkel folgender Vorschrift genügt oder dieser mindestens annähernd folgt:

$$V = arctan\ (tan\ (W)\ x\ (r)/(d0/2)),$$

wobei

$$d0/2 = halber\ Teilkreisdurchmesser\ der\ Außenverzahnung$$

und

r = Abstand eines Bezugspunkts des Verstärkungsabschnitts von der Rotationsachse R ist.

Ein solcher Bezugspunkt kann insbesondere an der der Verzahnung zugewandten Spitze des Verstärkungsabschnitts liegen. In diesem Fall wäre dann r der Radius des Kopfkreises der Verstärkungsabschnitte des Stützkörpers. Es sind auch Ausführungsformen denkbar, bei denen der Verstärkungsabschnitt so gekrümmt verläuft, dass der Winkel V, unter dem der entsprechende Abschnitt des Verstärkungsabschnitts verläuft, nicht konstant ist, sondern sich in Abhängigkeit vom Abstand von der Rotationsachse des Zahnrads verändert, insbesondere nach der oben genannten Formel.

Es hat sich für die Realisierung eines erfindungsgemäßen Zahnrades als zweckmäßig erwiesen, dass der Schrägungswinkel W größer als 0 Grad und kleiner als 25 Grad, vorzugweise etwa 10 Grad bis 20 Grad und insbesondere annähernd etwa 15 Grad beträgt.

Erfindungsgemäße Stützkörper weisen eine ringförmige Trägerstruktur auf, die senkrecht zur Rotationsachse ausgerichtet ist und an der die jeweils einzelnen Zähnen des Zahnrads zugeordneten Verstärkungsabschnitte angeordnet sind. Eine Anordnung mit einer Vielzahl von Verstärkungsabschnitten, die unter dem Winkel V zur Mittelachse verlaufen lässt sich auf diese Weise besonders leicht realisieren. Insbesondere erstrecken sich daher die Verstärkungsabschnitte ausgehend von der ringförmigen Trägerstruktur nicht exakt in axialer Richtung, sondern unter dem Winkel V.

In radialer Richtung laufen die Verstärkungsabschnitte in Richtung auf einen jeweiligen Zahn der Außenverzahnung zu und erstrecken sich bis zum Fußkreis der Außenverzahnung oder ragen sogar in diesen hinein. Erfindungsgemäß überragen die Verstärkungsabschnitte zumindest abschnittsweise die ringförmige Trägerstruktur in radialer Richtung, was dann beim Umspritzen des Stützkörpers während der Herstellung des Zahnrads dazu führt, dass der Verstärkungsabschnitt in den Zahnradkörper eingebettet wird und sich nicht aus diesem herausarbeiten kann.

Die Kraftübertragung über die ringförmige Trägerstruktur kann verbessert erfolgen, wenn die ringförmige Trägerstruktur erste Vorsprünge aufweist, die in radialer Richtung auf jeweils einen Zahn der Außenverzahnung hin vorspringen.

Da diese ersten Vorsprünge der Trägerstruktur, die in radialer Richtung auf jeweils einen Zahn der Außenverzahnung hin vorspringen, gegenüber der maximalen Ausdehnung der Verstärkungsabschnitte in radialer Richtung zurückgesetzt sind und die Verstärkungsabschnitte in axialer Richtung gegenüber der im Wesentlichen ebenen Stirnfläche zurückgesetzt sind, entsteht beim Umspritzen ein Abschnitt des Zahnkörpers, der in axialer Richtung den Verstärkungsabschnitt überdeckt und so den Stützkörper gegen ein Herausarbeiten sichert.

Weiter verbessert wird die Kraftübertragung über den Stützkörper, wenn die ringförmige Trägerstruktur zweite Vorsprünge aufweist, die entgegen der radialen Richtung auf die Wand der Aufnahmeöffnung hin zurückspringen. Besonders vorteilhaft ist es dabei, wenn ein erster Vorsprung, der in radialer Richtung auf jeweils einen Zahn der Außenverzahnung hin vorspringt und ein zweiter Vorsprung, der entgegen der radialen Richtung auf die Wand der Aufnahmeöffnung hin zurückspringt, einander an einer jeweiligen Stelle der ringförmigen Trägerstruktur gegenüber liegen.

Es kann auch vorteilhaft sein, wenn Bereiche der Verstärkungsabschnitte, die der Aufnahmeöffnung zugewandt sind - insbesondere solche, die sich unterhalb der zweiten Vorsprünge befinden oder in Richtung auf die Aufnahmeöffnung hin über die ringförmige Trägerstruktur hinausragen- nicht unter dem Winkel V, sondern parallel zur Mittelachse verlaufen.

Bevorzugt ist ferner, wenn der Stützkörper Öffnungen aufweist, die sich jeweils in Richtung parallel zur Rotationsachse durch die ringförmige Trägerstruktur hindurch in einen Verstärkungsabschnitt hinein erstrecken; besonders bevorzugt ist es, wenn zumindest ein Teil dieser Öffnungen einen Hinterschnitt aufweist.

Die Aufnahmeöffnung des Zahnrades ist mit einer geeigneten Struktur zur Aufnahme einer Nabe, einer Welle oder einer Spindel ausgestattet. Sofern die Aufnahmeöffnung eine Spindel aufnehmen soll, ist die Aufnahmeöffnung bevorzugt mit einer Spindelmutterverzahnung versehen, in die die Spindel eingedreht werden kann. Eine solche Spindel kann beispielsweise einen Betätigungskolben einer elektrischen Bremse beim Verdrehen des Zahnrades, das Bestandteil einer Getriebeanordnung einer elektrischen Bremse ist, betätigen.

In einer besonderen Ausführungsform der Erfindung ist das Zahnrad an einer seiner axialen Stirnseiten mit einem Fortsatz versehen zur Aufnahme eines Radial- und Axiallagers, wie zum Beispiel eines Kugellagers. Dabei kann der Fortsatz als umlaufender Ring mit einer Vielzahl von gleichmäßig verteilten und radial nach außen gerichteten Rippen gebildet sein, wobei ein Außendurchmesser des Fortsatzes kleiner als ein Außendurchmesser der Außenverzahnung ist. Das oben erwähnte Kugellager kann hier beispielsweise klemmend auf den Rippen aufgeschoben werden, sofern die Rippen einen Außendurchmesser aufweisen, der etwas größer gewählt ist als der Aufnahmering des Kugellagers.

Sofern das Zahnrad an einer axialen Stirnseite einen Fortsatz aufweist, empfiehlt es sich, zwischen dem Fortsatz und der axialen Stirnseite des Zahnrades eine umlaufende, konkave Vertiefung vorzusehen. Eine solche umlaufende, konkave Vertiefung mindert die Scherkräfte bei Belastung des Zahnrades.

In einer anderen Ausbildung der Erfindung sind die radial nach außen weisenden Stirnseiten der Zähne des Zahnrades in Achsrichtung des Zahnrades gesehen stufenförmig ausgebildet. Dabei kann die Außenverzahnung eine oder mehrere Stufen aufweisen. Eine solche Abstufung der außenliegenden Stirnseiten der Zähne, also des Zahnkopfes der Zähne, sorgt für eine Erhöhung des Tragbildes des Zahnrades.

In einer Weiterbildung der Erfindung weisen die Zähne der Außenverzahnung in Axialrichtung gesehen einen randseitigen Verzahnungsabschnitt auf, welcher von der Schrägverzahnung mit dem Schrägungswinkel W in eine Geradverzahnung mit dem Schrägungswinkel 0 Grad übergeht. Durch diese Maßnahme können Spannungen im Zahnfuß eines Zahnes der Außenverzahnung über einen größeren Bereich verteilt werden.

Die Erfindung wird nachfolgend anhand von Figuren, die ein Ausführungsbeispiel darstellen, näher erläutert. Es zeigt:

Figur 1    eine perspektivische Ansicht eines Zahnrades nach der Erfindung mit einer konkreten Anwendungssituation gemeinsam mit einer Antriebswelle und einer Spindel, die in das Zahnrad eingesetzt ist,

Figur 2    eine perspektivische Ansicht des Zahnrades der Figur 1 mit Blick von schräg vorne,

Figur 3    eine perspektivische Ansicht des Zahnrads der Figur 2 mit Blick von schräg hinten,

Figur 4    eine Seitenansicht des Zahnrads der Figuren 1 bis 3,

Figur 5    eine Draufsicht auf die hintere Seite des Zahnrades aus Figur 1 bis 4 mit erkennbaren Anspritzpunkten,

Figur 6    eine perspektivische Ansicht des in das Zahnrad der Figuren 1 bis 5 eingesetzten Stützkörpers mit Blick von schräg vorne,

Figur 7    eine perspektivische Ansicht des Stützkörpers aus Figur 6 von schräg hinten,

Figur 8a    eine Draufsicht auf die vordere Seite des Zahnrades der Figuren 1 bis 5 mit einer ersten angetragene Schnittlinie A - A

Figur 8b        eine Schnittansicht entlang der ersten Schnittlinie A - A von Figur 8a,

Figur 9a        eine Draufsicht auf die vordere Seite des Zahnrades der Figuren 1 bis 5 mit einer zweiten angetragene Schnittlinie A - A,

Figur 9b        eine Schnittansicht entlang zweiten Schnittlinie A - A von Figur 9a,

Figur 10a       eine Draufsicht auf die vordere Seite des Zahnrades der Figuren 1 bis 5 mit einer dritten angetragene Schnittlinie A - A, und

Figur 10b       eine Schnittansicht entlang der ersten Schnittlinie A - A von Figur 10a.

In den nachfolgenden Figuren bezeichnen gleiche Bezugszeichen gleiche Teile mit gleicher Bedeutung, es sei denn, es wird explizit auf eine andere Bedeutung hingewiesen. Zur Verbesserung der Übersichtlichkeit der Figuren sind nicht alle Bezugszeichen in allen Figuren angetragen.

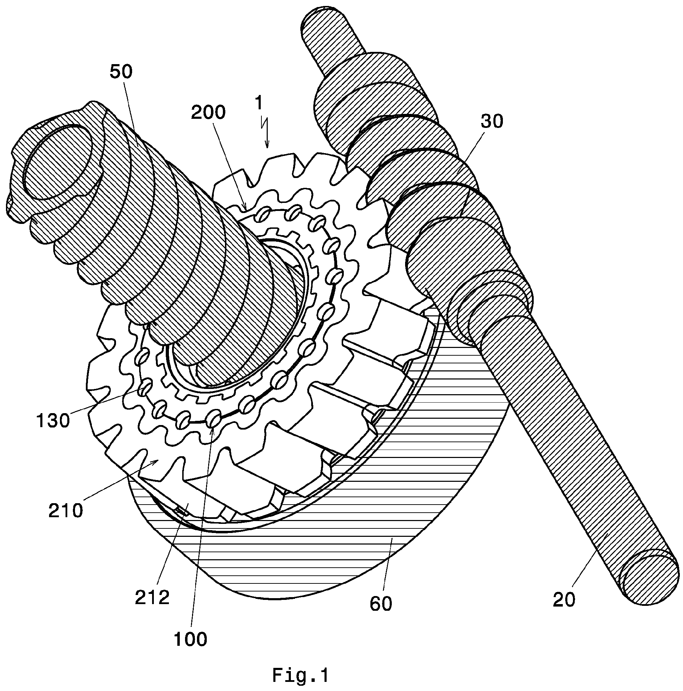

Figur 1 zeigt in perspektivischer Ansicht ein Zahnrad 1 in einer beispielhaften Anwendung, wie es beispielsweise in einem Bremsaktuator für eine Bremsanlage in einem Kraftfahrzeug eingesetzt werden kann. Dabei sind die Komponenten, mit denen das Zahnrad 1 in der Konfiguration dieser Anwendung zusammenwirkt schraffiert dargestellt. Die dem Betrachter zugewandte Seite 2 des Zahnrads 1 wird nachfolgend auch als Vorderseite des Zahnrads 1 bezeichnet und Ansichten, die diese Vorderseite zeigen, sind Ansichten von vorne. Die der Seite 2 gegenüberliegende Seite 3 des Zahnrads 1 wird dementsprechend auch als Rückseite bezeichnet; sie ist in Ansichten des Zahnrads 1 von hinten zu sehen.

Das Zahnrad 1 besteht aus zwei Kunststoffteilen, die durch Kunststoffspritzen feststehend miteinander verbunden sind, nämlich aus einem Zahnradkörper 200 aus einem ersten Kunststoffmaterial und einem Stützkörper 100 aus einem zweiten Kunststoffmaterial, das eine höhere Steifigkeit und eine geringere Elastizität als das erste Kunststoffmaterial aufweist. Der Zahnradkörper 200 ist an und bereichsweise um den Stützkörper 100 mittels Kunststoffspritzen feststehend angeformt. Details hierzu werden nachfolgend noch näher erläutert.

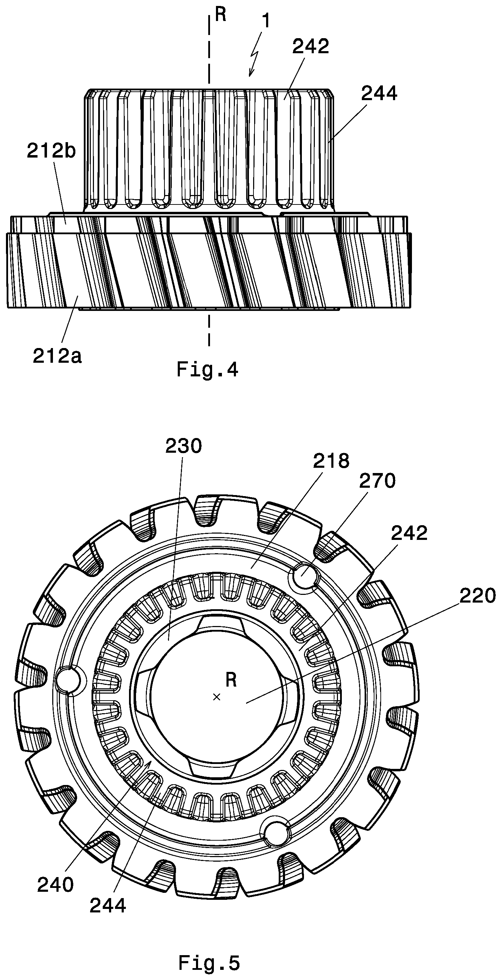

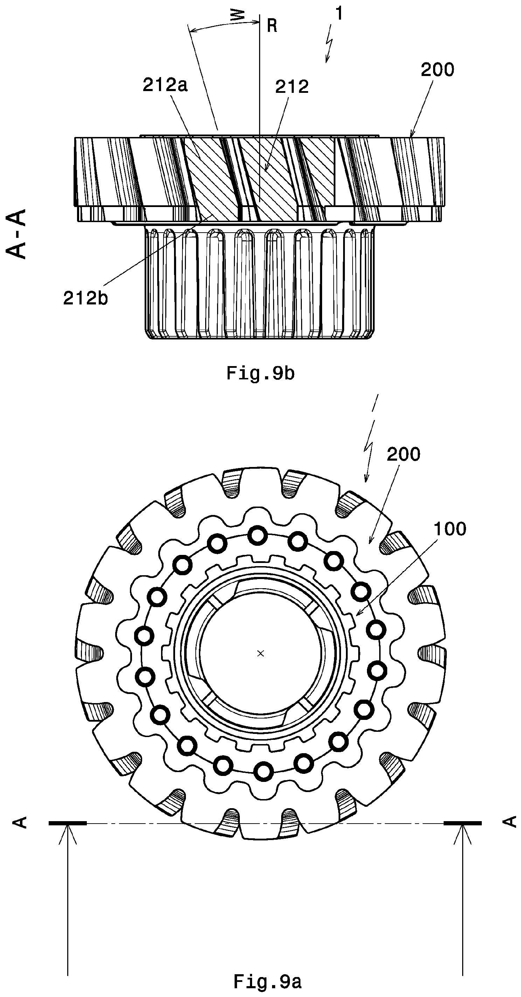

Das Zahnrad 1 verfügt am Zahnradkörper 200 über eine Außenverzahnung 210 mit Zähnen 212. Die Außenverzahnung 210 ist eine Schrägverzahnung; die Zähne 212 verlaufen, wie man in der Ansicht der Figur 4 und besonders gut in der Schnittdarstellung der Figur 9b entlang der in Figur 9a gezeigten, im Teilkreis der Außenverzahnung 210 des Zahnrades 1 verlaufenden Schnittlinie A-A erkennt, zumindest abschnittsweise, nämlich in den Zahnabschnitten 212a unter einem Schrägungswinkel W zur gedachten Rotationsachse R des Zahnrads 1, deren Lage exemplarisch in den Figuren 4,5,9a und 9b eingezeichnet ist. Dieser Schrägungswinkel W ist >0° und beträgt beispielsweise im dargestellten Ausführungsbeispiel etwa 15°. Der Schrägungswinkel (W) kann auch zwischen etwa >0° und < 25°, vorzugsweise zwischen etwa 10° und 20° liegen.

Diese Außenverzahnung 210 steht mit einer Schnecke 30 kämmend in Eingriff, wobei die Schnecke 30 auf einer Welle 20 feststehend montiert ist, welche zum Beispiel von einem Motor, der in Figur 1 nicht dargestellt ist, angetrieben werden kann.

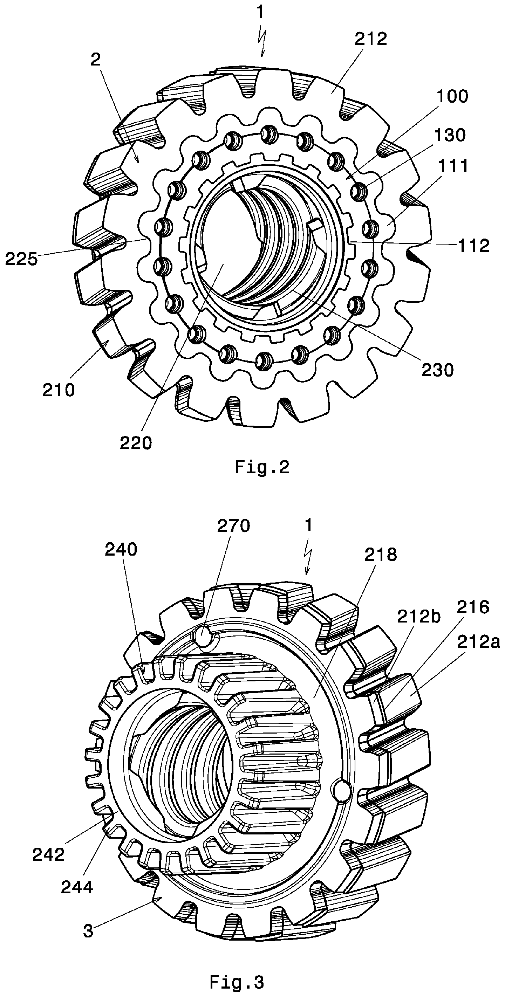

Im Inneren des Zahnradkörpers 200 ist, wie in der Figur 2 besonders gut zu erkennen ist, in einer zentrisch angeordneten Aufnahmeöffnung 220, genauer gesagt an der Wand dieser Aufnahmeöffnung 220, eine Spindelmutterverzahnung 230 vorgesehen, in welche eine Spindel 50 eingreift, so dass bei einer Drehung der Schnecke 30 die dortige rotatorische Bewegung in eine translatorische Bewegung der Spindel 50 entlang einer Längsachse X umgewandelt werden kann. Die Spindel kann z.B. auf einen Kolben in einem Hydraulikkreislauf drücken, der auf eine Bremse oder einen Bremskolben einwirkt.

Wie man beispielsweise in der Figur 2 und besonders deutlich in Figur 3 erkennt, gehen die Zähne 212 der äußeren Verzahnung nicht unmittelbar in die Wand 221 der Aufnahmeöffnung 220 über, so dass der Zahnradkörper 200 einen Zwischenbereich 225 aufweist, in dem insbesondere die in Figur 1 sichtbaren Abschnitte des Stützkörpers 100 angeordnet sind, und zwar so, dass Oberflächenabschnitte der Außenverzahnung 210, der Wand 221 der Aufnahmeöffnung 220, des Zwischenabschnitts 225 und des Stützkörpers 100 die in Figur 1 erkennbare, im Wesentlichen ebene Stirnfläche des Zahnrads 1 bilden, die nachfolgend auch als die vordere Stirnfläche des Zahnrads 1 bezeichnet wird.

Dass diese Stirnfläche nicht vollständig sondern nur im Wesentlichen eben ist, fällt nur bei genauer Betrachtung der Figuren 4,8b,9b und 10b auf. Zwar sind die Übergänge zwischen den Oberflächen der Außenverzahnung 210 bzw. dem Zwischenabschnitt 225 bzw. der Wand 221 der Aufnahmeöffnung 220 einerseits und dem Stützkörper 100 andererseits stufenlos, aber die Oberfläche des Stützkörpers 100 weist eine minimale umlaufende Stufe mit einer Höhe von weniger als 1mm auf, die zu einem leichten Parallelversatz der Stirnseitenoberfläche führt, der aber so gering ist, dass er den Bauraumbedarf für das Zahnrad 1 nicht signifikant beeinflusst.

Auf der der vorderen Stirnfläche gegenüber liegenden Seite 3, also der Rückseite des Zahnrads 1 befindet sich ein Fortsatz 240, auf welchem in diesem Anwendungsbeispiel ein Radial- und Axiallager 60 in Form eines Kugellagers aufgenommen ist.

Wie man besonders gut in Figur 4 erkennen kann, hat der Fortsatz 240 hat einen kleineren Durchmesser D1 im Vergleich zum Durchmesser D2 der äußeren Verzahnung 210. Der Fortsatz 240 besteht aus einer ringförmigen Verlängerung 242 der Wand 221 der Aufnahmeöffnung220. Von der ringförmigen Verlängerung 242 weg erstrecken sich radial nach außen Rippen 244. Das Lager 60 wird vorzugsweise klemmend auf diesen Rippen 244 aufgesetzt, wofür die Außenmaße der Rippen 244 etwas größer als der Innendurchmesser des Lagers, insbesondere des Kugellagers, gewählt sind.

Dementsprechend ist die Stirnfläche der Rückseite 3 des Zahnrads 1 offensichtlich nicht im Wesentlichen eben, da sie von den rückwärtigen Oberflächenabschnitten der Außenverzahnung 210, der rückwärtigen Oberfläche des Zwischenabschnitts 225 und er Stirnfläche des Fortsatzes 240, die von den anderen Bestandteilen der Stirnfläche der Rückseite 3 des Zahnrads in axialer Richtung klar beabstandet ist, gebildet ist.

Wie insbesondere die Figuren 3 und 4 deutlich zeigen, weisen die radial nach außen weisenden Stirnseiten der Zähne 212 der Außenverzahnung 210 in Achsrichtung der gedachten Mittelachse R gesehen jeweils eine Stufe 216 auf. Die Stufe 216 definiert, wie man besonders gut in Figur 4 sehen kann zugleich einen Übergang von einem Zahnabschnitt 212a der Zähne 212, der die Schrägverzahnung mit dem Winkel W bildet, zu einem Zahnabschnitt 212b der Zähne 212, in dem eine Geradverzahnung mit dem Schrägungswinkel 0 vorliegt, wodurch Spannungen im Zahnfuß eines Zahnes 212 der Außenverzahnung 210 über einen größeren Bereich verteilt werden.

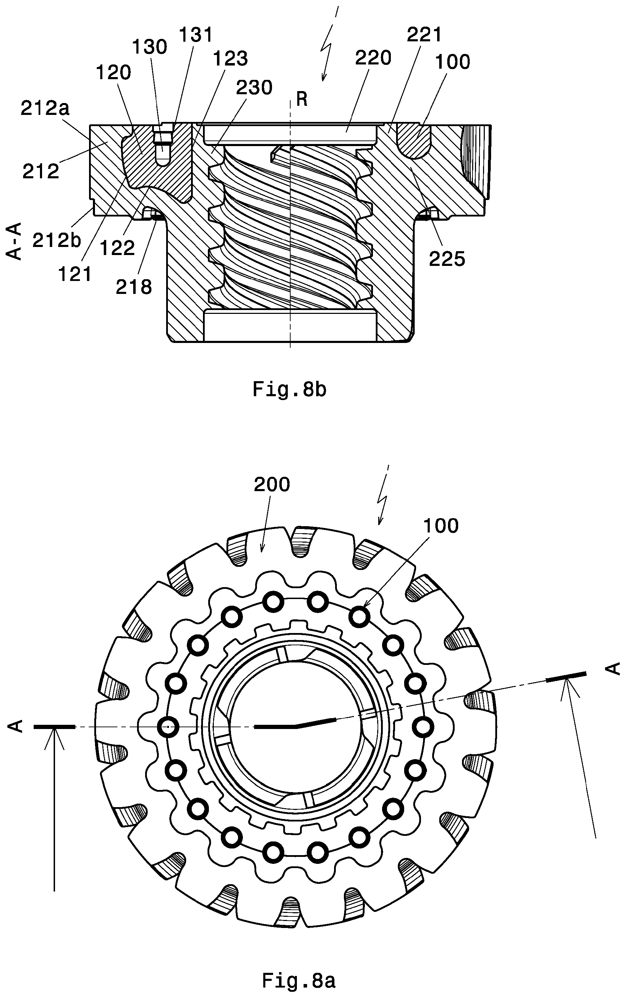

Wie insbesondere die Figuren 3 und 8b deutlich erkennen lassen, ist eine umlaufende, konkave Vertiefung 218 zwischen dem Fortsatz 240 und der zweiten axialen Stirnseite 3 zu erkennen. Diese umlaufende konkave Vertiefung 218 sorgt für eine Verminderung der Scherkräfte bei Belastung des Zahnrades 1.

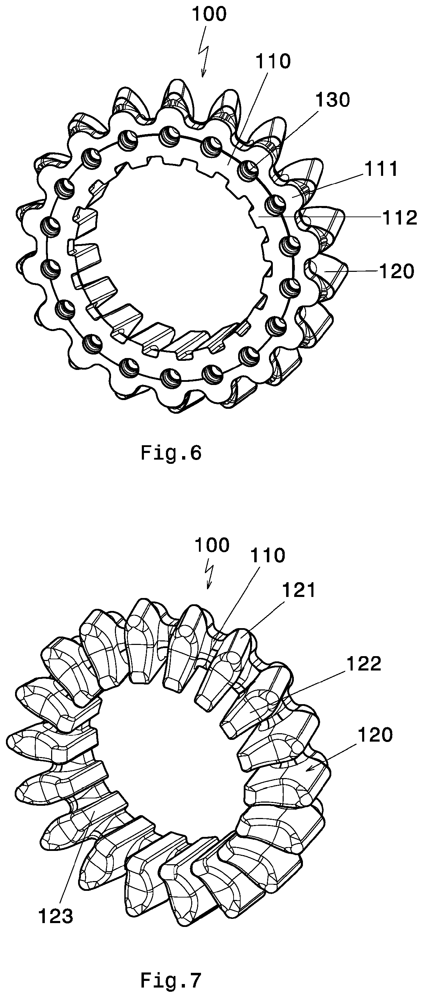

Der Aufbau des Stützkörpers 100 lässt sich besonders gut anhand der Figuren 6 und 7 erkennen. Wie man diesen Figuren entnimmt, weist der Stützkörper 100 eine ringförmige Trägerstruktur 110 aufweist, die senkrecht zur Rotationsachse ausgerichtet ist und an der für jeden Zahn 212 ein Verstärkungsabschnitt 120 angeordnet ist.

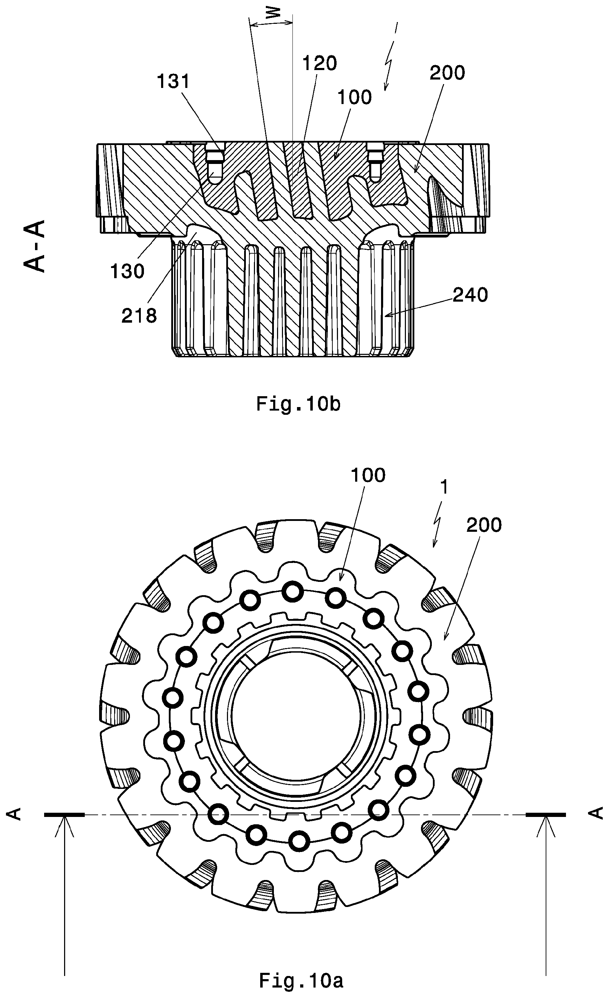

Insbesondere erstrecken sich die Verstärkungsabschnitte 120 ausgehend von der ringförmigen Trägerstruktur 110 nicht exakt in axialer Richtung der Mittelachse R, sondern unter dem Winkel V, was die in Figur 10b gezeigte Schnittdarstellung längs der in Figur 10a dargestellten Schnittlinie A-A verdeutlicht. In diesem Ausführungsbeispiel ist der Winkel V kleiner als der Schrägungswinkel W und gemäß der Formel

$$V = \arctan\,(\tan\,(W)\,\times\,(r)/(d0/2)),$$

wobei

$$d0/2 = \text{halber Teilkreisdurchmesser der Außenverzahnung 210}$$

und

r = Abstand eines Bezugspunkts des Verstärkungsabschnitts 120 von der Rotationsachse R ist.

Ein solcher Bezugspunkt kann insbesondere an der der Verzahnung zugewandten Spitze des Verstärkungsabschnitts liegen. In diesem Fall wäre dann r der Radius des Kopfkreises der Verstärkungsabschnitte des Stützkörpers.

In radialer Richtung können die Verstärkungsabschnitte 120 in Richtung auf einen jeweiligen Zahn 212 der Außenverzahnung 210 zulaufen und sich bis zum Fußkreis der Außenverzahnung 210 erstrecken oder sogar in diesen hineinragen. Insbesondere können die Verstärkungsabschnitte 120 zumindest abschnittsweise die ringförmige Trägerstruktur 110 in radialer Richtung überragen, wie in Figur 6 und in der als Figur 8b gezeigten Schnittdarstellung längs der in Figur 8a dargestellten Schnittlinie A-A zu erkennen ist. Dies führt, wie Figur 8b veranschaulicht, dazu, dass was dann beim Umspritzen des Stützkörpers 100 während der Herstellung des Zahnrads dazu führt, dass die Verstärkungsabschnitte 120 in den Zahnradkörper 200 eingebettet werden und sich nicht aus diesem herausarbeiten können.

Wie beispielsweise in Figur 6 klar zu erkennen ist, weist die ringförmige Trägerstruktur 110 erste Vorsprünge 111 auf, die in radialer Richtung auf jeweils einen Zahn 212 der Außenverzahnung 210 hin vorspringen. Diese ersten Vorsprünge 111 der ringförmigen Trägerstruktur 110, sind gegenüber der maximalen Ausdehnung der Verstärkungsabschnitte 120 in radialer Richtung zurückgesetzt, während die Verstärkungsabschnitte 120 in axialer Richtung gegenüber der Stirnfläche der ringförmigen Trägerstruktur 110 zurückgesetzt sind, so dass beim Umspritzen ein Abschnitt des Zahnkörpers 200, der in axialer Richtung den Verstärkungsabschnitt 120 überdeckt und so den Stützkörper 100 weiter gegen ein Herausarbeiten sichert.

Weiter verbessert wird die Kraftübertragung über den Stützkörper 100 durch an der ringförmigen Trägerstruktur 110 vorgesehene zweite Vorsprünge 112, die entgegen der radialen Richtung auf die Wand der Aufnahmeöffnung hin zurückspringen und jeweils einem korrespondierenden ersten Vorsprung 111 an einer jeweiligen Stelle der ringförmigen Trägerstruktur 110 gegenüber liegen.

Zudem weist der Stützkörper 100 Öffnungen 130 auf, die sich jeweils in Richtung parallel zur Rotationsachse R durch die ringförmige Trägerstruktur 110 hindurch in einen Verstärkungsabschnitt 120 hinein erstrecken. Diese Öffnungen sind mit einem Hinterschnitt 131 versehen.

Weitere Besonderheiten der Formgebung der Verstärkungsabschnitte 120 erkennt man aus der in Figur 7 gewählten Perspektive und in Figur 8b. Die zahnseitige Flanke 121 der Verstärkungsabschnitte 120 ist kürzer als ihre aufnahmeseitige Flanke 123, mit der die zahnseitige Flanke über eine konkav verlaufende Stirnseite 122 des jeweiligen Verstärkungsabschnitts 120 verbunden ist. Diese Formgebung ermöglicht es, einen möglichst langen Abschnitt der Aufnahme 240 zu verstärken, gleichzeitig aber die konkave Vertiefung 218 im Zahnradkörper 200 vorsehen zu können.

Hergestellt wird ein solches Zahnrad 1 zweckmäßigerweise folgendermaßen:

- Spritzgießen des Stützkörpers 100 aus dem zweiten Kunststoffmaterial,
- Umspritzen des Stützkörpers 100 mit einem Zahnradradkörper 200 aus dem ersten Kunststoffmaterial, welches eine geringere Steifigkeit und eine höhere Elastizität als das zweite Kunststoffmaterial aufweist, wobei
- der Zahnradkörper 200 eine äußere Verzahnung 210 und eine innenliegende Spindelmutterverzahnung 230 zur Aufnahme der Spindel 50 aufweist, und
- das Umspritzen so erfolgt, dass Oberflächenabschnitte der Außenverzahnung 210, der Wand 221 der Aufnahmeöffnung 220, des Zwischenabschnitts 225 und des Stützkörpers 100 eine im Wesentlichen ebene Stirnfläche des Zahnrads 1 bilden.

Dabei kann der Stützkörper 100 entweder vorgefertigt in ein Spritzwerkzeug eingelegt werden und das Spritzgießen des Zahnradkörpers erfolgt anschließend in einem geeigneten Werkzeug. Alternativ kann aber entsprechend sog. 2K-Technik ein besonderes Werkzeug vorgesehen werden, bei dem zuerst der Stützkörper 100 kunststoffgespritzt wird und anschließend in dem gleichen Werkzeug auf diesen Stützkörper 100 der Zahnradkörper 200 gespritzt wird. Bei beiden Verfahren verfügt der Zahnradkörper 200 über mehrere in den Figuren 3 und 5 erkennbare Anspritzpunkte 270, die vorzugsweise axial an derjenigen Seite liegen, die den Verstärkungsabschnitten 120 des Stützkörpers 100 zugewandt ist.

Bezugszeichenliste

| | |
|---|---|
| 1 | Zahnrad |
| 2 | (vordere) Seite |
| 3 | (rückwärtige) Seite |
| 20 | Welle |
| 30 | Schnecke |
| 50 | Spindel |
| 60 | Radial- und Axiallager |
| | |
| 100 | Stützkörper |
| 110 | ringförmige Trägerstruktur |
| 111 | erster Vorsprung |
| 112 | zweiter Vorsprung |
| 120 | Verstärkungsabschnitt |
| 121 | zahnseitige Flanke |
| 122 | konkav verlaufende Stirnseite |
| 123 | aufnahmeseitige Flanke |
| 130 | Öffnung |
| 131 | Hinterschnitt |
| | |
| 200 | Zahnradkörper |
| 210 | Außenverzahnung |
| 212 | Zahn |
| 212a | Zahnabschnitt |
| 212b | Zahnabschnitt |
| 216 | Stufe |

| 218 | konkave Vertiefung |
| 220 | Aufnahmeöffnung |
| 221 | Wand |
| 225 | Zwischenabschnitt |
| 230 | Spindelmutterverzahnung |
| 240 | Fortsatz |
| 242 | ringförmige Verlängerung |
| 244 | Rippe |
| 270 | Anspritzpunkt |
| | |
| D1,D2 | Durchmesser |
| | |
| R | Rotationsachse |
| V | Winkel |
| W | Schrägungswinkel |
| A-A | Schnittlinie |

**Patentansprüche**

1. Zahnrad (1) mit einem Zahnradkörper (200) aus einem ersten Kunststoffmaterial, wobei der Zahnradkörper (200)

   - eine Rotationsachse (R),
   - eine um eine Rotationsachse angeordneten Außenverzahnung (210),
   - eine zentrisch angeordneten Aufnahmeöffnung (220), und
   - einen zwischen der Außenverzahnung (210) und der Wand (221) der Aufnahmeöffnung (220) angeordneten Zwischenabschnitt (225),

   aufweist,

   wobei der Zahnradkörper (200) feststehend an einem zumindest teilweise im Zwischenabschnitt (225) angeordneten Stützkörper (100) aus einem zweiten Kunststoffmaterial, welches eine höhere Steifigkeit und eine geringere Elastizität als das erste Kunststoffmaterial aufweist, angeformt ist, so dass Oberflächenabschnitte der Außenverzahnung (210), der Wand (221) der Aufnahmeöffnung (220), des Zwischenabschnitts (225) und des Stützkörpers (100) eine im Wesentlichen ebene Stirnfläche des Zahnrads (1) bilden, und wobei der Stützkörper (100) Verstärkungsabschnitte (120) für Zähne (212) der Außenverzahnung (210) aufweist, und mit folgenden weiteren Merkmalen:

   - die Außenverzahnung (210) ist eine Schrägverzahnung mit Zähnen (212), die zumindest abschnittsweise unter einem Schrägungswinkel (W) zur Rotationsachse (R) verlaufen, und
   - mindestens ein Teil der Verstärkungsabschnitte (120) verläuft zumindest abschnittsweise unter einem Winkel (V), der mindestens annähernd dem Schrägungswinkel (W) der Schrägverzahnung entspricht,

   wobei der Stützkörper (100) eine ringförmige Trägerstruktur (110) aufweist, die senkrecht zur Rotationsachse (R) ausgerichtet ist und an der die Verstärkungsabschnitte (120) angeordnet sind,
   dass die ringförmige Trägerstruktur (110) erste Vorsprünge (111) aufweist, die in radialer Richtung auf jeweils einen Zahn (212) der Außenverzahnung (210) hin vorspringen,
   **dadurch gekennzeichnet, dass** die ersten Vorsprünge (111) der Trägerstruktur (110), die in radialer Richtung auf jeweils einen Zahn (212) der Außenverzahnung (210) hin vorspringen, gegenüber der maximalen Ausdehnung der Verstärkungsabschnitte (120) in radialer Richtung zurückgesetzt sind.

2. Zahnrad (1) nach Anspruch 1,
   **dadurch gekennzeichnet, dass** das zweite Kunststoffmaterial ein glasfaser-, aramidfaser oder kohlefaserverstärktes Kunststoffmaterial oder ein glaskugel- oder mineralgefülltes Kunststoffmaterial, insbesondere ein derart verstärktes oder gefülltes Polyphenylensulfid (PPS), ist.

3. Zahnrad (1) nach Anspruch 1 oder 2,
   **dadurch gekenzeichnet,** dass das erste Kunststoffmaterial ein gleitoptimiertes Kunststoffmaterial oder Thermoplast, insbesondere Polyoxymethylen (POM), ist.

4. Zahnrad (1) nach einem der Ansprüche 1 bis 3,
   **dadurch gekennzeichnet, dass** der Winkel (V) kleiner als der Schrägungswinkel (W) ist.

5. Zahnrad (1) nach einem der vorherigen Ansprüche,

   **dadurch gekennzeichnet, dass** die Beziehung zwischen dem Winkel (V) und dem Schrägungswinkel (W) durch die Formel:

$$V = arctan (tan (W) x (r)/(d0/2)),$$

   wobei

   d0/2 = halber Teilkreisdurchmesser der Außenverzahnung (10),

   r = Abstand eines Bezugspunkts des Verstärkungsabschnitts von der Rotationsachse (R).

6. Zahnrad (1) nach einem der Ansprüche 1 bis 5,
   **dadurch gekennzeichnet, dass** die Verstärkungsabschnitte (120) in axialer Richtung gegenüber der im Wesentlichen ebenen Stirnfläche zurückgesetzt sind.

7. Zahnrad (1) nach einem der Ansprüche 1 bis 6,
   **dadurch gekennzeichnet, dass** die ringförmige Trägerstruktur (110) zweite Vorsprünge (112) aufweist, die entgegen der radialen Richtung auf die Wand (221) der Aufnahmeöffnung (220) hin zurückspringen.

8. Zahnrad (1) nach Anspruch 7,
   **dadurch gekennzeichnet, dass** jeweils ein erster Vorsprung (111), der in radialer Richtung auf jeweils einen Zahn (212) der Außenverzahnung (210) hin vorspringt und ein zweiter Vorsprung (112), der entgegen der radialen Richtung auf die Wand (221) der Aufnahmeöffnung (220) hin zurückspringt, einander an einer jeweiligen Stelle der ringförmigen Trägerstruktur (110) gegenüber liegen.

9. Zahnrad (1) nach einem der Ansprüche 1 bis 8,
   **dadurch gekennzeichnet, dass** der Stützkörper (100) Öffnungen (130) aufweist, die sich jeweils in Richtung parallel zur Rotationsachse durch die ringförmige Trägerstruktur (110) hindurch in einen Verstärkungsabschnitt (120) hinein erstrecken.

10. Zahnrad (1) nach Anspruch 9,
    **dadurch gekennzeichnet, dass** zumindest ein Teil der Öffnungen (130) einen Hinterschnitt (131) aufweist.

11. Zahnrad (1) nach einem der vorherigen Ansprüche,
    **dadurch gekennzeichnet , dass** in der Aufnahmeöffnung (40) eine Spindelmutterverzahnung (42) angeordnet ist.

12. Zahnrad (1) nach einem der vorherigen Ansprüche,
    **dadurch gekennzeichnet, dass** der Zahnradkörper (200) an der der durch Abschnitte des Zahnradkörpers (200) und Abschnitte des Stützkörpers (100) gebildete Stirnfläche gegenüberliegenden Seite (3) einen Fortsatz (240) aufweist zur Aufnahme eines Radial- und Axiallagers (60), insbesondere eines Kugellagers.

13. Zahnrad (1) nach Anspruch 12,
    **dadurch gekenzeichnet**, dass der Fortsatz (240) als umlaufender Ring (242) mit einer Vielzahl von gleichmäßig verteilten und radial nach außen gerichteten Rippen (241) gebildet ist, wobei ein Außendurchmesser (D2) des Fortsatzes (240) kleiner als ein Außendurchmesser (D1) der Außenverzahnung (210) ist.

14. Zahnrad (1) nach Anspruch 12 oder 13,
    **dadurch gekennzeichnet, dass** zwischen dem Fortsatz (240) und einer ihm zugewandten axialen Seite (3) des Zahnrades (1) eine umlaufende, konkave Vertiefung (218) vorgesehen ist.

15. Zahnrad (1) nach einem der vorherigen Ansprüche,

**dadurch gekennzeichnet, dass** radial nach außen weisende Stirnseiten der Zähne (212) des Zahnrades (1) in Achsrichtung des Zahnrades (1) gesehen mindestens eine Stufe (216), aufweisen.

16. Zahnrad (1) nach einem der vorherigen Ansprüche,
**dadurch gekennzeichnet, dass** die Zähne (212) der Außenverzahnung (210) in Axialrichtung gesehen eine randseitigen Zahnabschnitt (212b) aufweisen, welcher von der Schrägverzahnung mit dem Winkel (W) in eine Geradverzahnung mit dem Schrägungswinkel 0° übergeht.

17. Zahnrad (1) nach einem der vorherigen Ansprüche,
**dadurch gekennzeichnet, dass** der Schrägungswinkel (W) größer als 0° und kleiner etwa 25°, vorzugsweise etwa 10° bis 20° und insbesondere etwa annähernd 15° beträgt.

**Claims**

1. Gear (1) having a gear body (200) made of a first plastic material, wherein the gear body (200) comprises

   - a rotation axis (R),
   - an external toothing (210) arranged around the rotation axis,
   - a centrally arranged receiving opening (220), and
   - an intermediate section (225) arranged between the external toothing (210) and the wall (221) of the receiving opening (220),
   wherein the gear body (200) is molded in a fixed manner onto a support body (100) made of a second plastic material, which is arranged at least partially in the intermediate section (225) and which has a higher stiffness and a lower elasticity than the first plastic material, such that surface sections of the external toothing (210), the wall (221) of the receiving opening (220), the intermediate section (225), and the support body (100) form a substantially planar end face of the gear (1), and wherein the support body (100) comprises reinforcing sections (120) for teeth (212) of the external toothing (210), and with the following further features:

      - the external toothing (210) is a helical toothing with teeth (212) which extend at least in sections at a helix angle (W) relative to the rotation axis (R), and
      - at least a part of the reinforcing sections (120) extends at least in sections at an angle (V) which corresponds at least approximately to the helix angle (W) of the helical toothing,

   wherein the support body (100) comprises an annular carrier structure which is oriented perpendicular to the rotation axis (R) and on which the reinforcing sections (120) are arranged,
   wherein the annular carrier structure (110) comprises first projections which project in the radial direction toward a respective tooth (212) of the external toothing (210),
   **characterized in that**
   the first projections (111) of the carrier structure (110), which project in the radial direction toward a respective tooth (212) of the external toothing (210), are recessed in the radial direction relative to the maximum radial extension of the reinforcing sections (120).

2. Gear (1) according to claim 1,
**characterized in that** the second plastic material is a glass fiber-, aramid fiber- or carbon fiber-reinforced plastic material or a glass bead- or mineral-filled plastic material, in particular a polyphenylene sulfide (PPS) reinforced or filled in this manner.

3. Gear (1) according to claim 1 or 2,
**characterized in that** the first plastic material is a sliding-optimized plastic material or thermoplastic, in particular polyoxymethylene (POM).

4. Gear (1) according to one of claims 1 to 3,
**characterized in that** the angle (V) is smaller than the helix angle (W).

5. Gear (1) according to one of the preceding claims,

   **characterized in that** the relationship between the angle (V) and the helix angle (W) is defined by the formula:

$$V = \arctan\,(\tan\,(W)\,\times\,(r)/(d0/2)),$$

wherein

d0/2 = half of the pitch circle diameter of the external toothing (10),

r = distance of a reference point of the reinforcing section from the rotation axis (R).

6. Gear (1) according to one of claims 1 to 5,
   **characterized in that** the reinforcing sections (120) are recessed in the axial direction relative to the substantially planar end face.

7. Gear (1) according to one of claims 1 to 6,
   **characterized in that** the annular carrier structure (110) comprises second projections (112) which are recessed counter to the radial direction toward the wall (221) of the receiving opening (220).

8. Gear (1) according to claim 7,
   **characterized in that** in each case a first projection (111), which projects in the radial direction toward a respective tooth (212) of the external toothing (210), and a second projection (112), which is recessed counter to the radial direction toward the wall (221) of the receiving opening (220), are arranged opposite one another at a respective location of the annular carrier structure (110).

9. Gear (1) according to one of claims 1 to 8,
   **characterized in that** the support body (100) comprises openings (130) which extend in each case in a direction parallel to the rotation axis through the annular carrier structure (110) and into a reinforcing section (120).

10. Gear (1) according to claim 9,
    **characterized in that** at least a part of the openings (130) comprises an undercut (131).

11. Gear (1) according to one of the preceding claims,
    **characterized in that** a spindle nut toothing (42) is arranged in the receiving opening (40).

12. Gear (1) according to one of the preceding claims,
    **characterized in that** the gear body (200) comprises, on the side (3) opposite the end face formed by sections of the gear body (200) and sections of the support body (100), a projection (240) for receiving a radial and axial bearing (60), in particular a ball bearing.

13. Gear (1) according to claim 12,
    **characterized in that** the projection (240) is formed as a circumferential ring (242) with a plurality of evenly distributed ribs (241) directed radially outward, wherein an outer diameter (D2) of the projection (240) is smaller than an outer diameter (D1) of the external toothing (210).

14. Gear (1) according to claim 12 or 13,
    **characterized in that** a circumferential, concave recess (218) is provided between the projection (240) and an axial side (3) of the gear (1) facing the projection.

15. Gear (1) according to one of the preceding claims,
    **characterized in that** radially outwardly facing end faces of the teeth (212) of the gear (1), as viewed in the axial direction of the gear (1), comprise at least one step (216).

16. Gear (1) according to one of the preceding claims,
    **characterized in that** the teeth (212) of the external toothing (210), as viewed in the axial direction, comprise an edge-side tooth section (212b) which transitions from the helical toothing with the angle (W) into a straight toothing with a helix angle of 0°.

17. Gear (1) according to one of the preceding claims,
    **characterized in that** the helix angle (W) is greater than 0° and less than approximately 25°, preferably approximately 10° to 20°, and in particular approximately 15°.

**Revendications**

1.  Roue (1) dentée ayant un corps (200) de roue dentée en une première matière plastique, dans laquelle le corps (200) de roue dentée a

    - un axe (R) de rotation,
    - une denture (210) extérieure disposée autour d'un axe de rotation,
    - une ouverture (220) de réception, disposée de manière centrée,
    et
    - une partie (225) intermédiaire disposée entre la denture (210) extérieure et la paroi (221) de l'ouverture (220) de réception,
    dans laquelle le corps (200) de la roue dentée est formée fixe sur un corps (100) d'appui disposé au moins en partie dans la partie (225) intermédiaire et en une deuxième matière plastique, qui a une rigidité plus grande et une élasticité plus petite que la première matière plastique, de manière à ce que des parties de surface de la denture (210) extérieure, de la paroi (221) de l'ouverture (220) de réception, de la partie (225) intermédiaire et du corps (100) d'appui forment une surface frontale sensiblement plane de la roue (1) dentée et dans laquelle le corps (100) d'appui a des parties (120) de renfort pour des dents (212) de la denture (210) extérieure, et comprenant les autres caractéristiques suivantes :

    - la denture (210) extérieure est une denture oblique, ayant des dents (212), qui s'étendent au moins par endroit en faisant un angle (W) d'inclinaison par rapport à l'axe (R) de rotation, et
    - au moins une partie des parties (120) de renfort s'étend au moins par endroit en faisant un angle (V), qui correspond au moins à peu près à l'angle (W) d'inclinaison de la denture oblique

    dans laquelle le corps (100) d'appui a une structure (110) annulaire de support, qui est dirigée perpendiculairement à l'axe (R) de rotation et sur laquelle les parties (120) de renfort sont disposées,
    en ce que la structure (110) annulaire de support a des premières saillies (111), qui font saillie dans la direction radiale sur respectivement une dent (212) de la denture (210) extérieure,
    **caractérisée en ce que** les premières saillies (111) de la structure (110) de support, qui font saillie dans la direction radiale sur respectivement une dent (212) de la denture (210) extérieure, sont en retrait dans la direction radiale par rapport à l'étendue maximum des parties (120) de renfort.

2.  Roue (1) dentée suivant la revendication 1,
    **caractérisée en ce que** la deuxième matière plastique est une matière plastique renforcée par de la fibre de verre, de la fibre d'aramide ou de la fibre de carbone ou une matière plastique chargée de billes de verre ou d'un minéral, en particulier du poly(sulfure de phénylène) (PPS), renforcé ou chargé.

3.  Roue (1) dentée suivant la revendication 1 ou 2,
    **caractérisée en ce que** la première matière plastique est une matière plastique optimisée pour le glissement ou une matière thermoplastique, en particulier du polyoxyméthylène (POM).

4.  Roue (1) dentée suivant l'une des revendications 1 à 3, **caractérisée en ce que** l'angle (V) est plus petit que l'angle (W) d'inclinaison.

5.  Roue (1) dentée suivant l'une des revendications précédentes,

    **caractérisée en ce que** la relation entre l'angle (V) et l'angle (W) d'inclinaison est donnée par la formule :

    $$V = \arctan(\tan(W) \times (r) / (d0/2)),$$

    dans laquelle
    d0/2 = demi-diamètre du cercle primitif de la denture (10) extérieure,
    r = distance d'un point de référence de la partie de renfort à l'axe (R) de rotation.

6.  Roue (1) dentée suivant l'une des revendications 1 à 5,
    **caractérisée en ce que** les parties (120) de renfort sont, dans la direction axiale, sensiblement en retrait par rapport à la surface frontale plane.

**7.** Roue (1) dentée suivant l'une des revendications 1 à 6,
**caractérisée en ce que** la structure (110) annulaire de support a des deuxième saillies (112) qui, dans le sens contraire à la direction radiale, reviennent sur la paroi (221) de l'ouverture (220) de réception.

**8.** Roue (1) dentée suivant la revendication 7,
**caractérisée en ce que** respectivement une première saillie (111) qui fait saillie, dans la direction radiale, sur respectivement une dent (212) de la denture (210) extérieure et une deuxième saillie (112), qui revient, dans le sens contraire à la direction radiale, sur la paroi (221) de l'ouverture (220) de réception, sont l'une contre l'autre, en un point respectif de la structure (110) annulaire de support.

**9.** Roue (1) dentée suivant l'une des revendications 1 à 8,
**caractérisée en ce que** le corps (100) d'appui a des ouvertures (130), qui s'étendent dans une partie (120) de renfort en traversant respectivement la structure (110) annulaire de support dans une direction parallèle à l'axe de rotation.

**10.** Roue (1) dentée suivant la revendication 9,
**caractérisée en ce qu'**au moins une partie des ouvertures (130) a une contre dépouille (131).

**11.** Roue (1) dentée suivant l'une des revendications précédentes,
**caractérisée en ce qu'**une denture (42) d'écrou à broche est disposée dans l'ouverture (40) de réception.

**12.** Roue (1) dentée suivant l'une des revendications précédentes,
**caractérisée en ce que** le corps (200) de roue dentée a, du côté (3) opposé à la surface frontale formée par des parties du corps (200) de la roue dentée et des parties du corps (100) d'appui, un prolongement (240) de réception d'un palier (60) radial et axial, en particulier d'un roulement à billes.

**13.** Roue (1) dentée suivant la revendication 12,
**caractérisée en ce que** le prolongement (240) est sous la forme d'un anneau (242) faisant le tour, ayant une pluralité de nervure (241) réparties uniformément et dirigées vers l'extérieur radialement, dans laquelle un diamètre (D2) extérieur du prolongement (240) est plus petit qu'un diamètre (D1) extérieur de la denture (210) extérieure.

**14.** Roue (1) dentée suivant la revendication 12 ou 13,
**caractérisée en ce qu'**une cavité (218) concave faisant le tour est prévue entre le prolongement (240) et un côté (3) axial de la roue (1) dentée, tourné vers lui.

**15.** Roue (1) dentée suivant l'une des revendications précédentes,
**caractérisée en ce que** des côtés frontaux, tournés vers l'extérieur radialement, des dents (212) de la roue (1) dentée, ont, considéré dans la direction axiale de la roue (1) dentée, au moins un étage (216).

**16.** Roue (1) dentée suivant l'une des revendications précédentes,
**caractérisée en ce que** les roues (212) de la denture (210) extérieure ont, considéré dans la direction axiale, une partie (212b) de dent du côté du bord, qui se transforme de la denture oblique ayant l'angle (W) en une denture droite, ayant l'angle d'inclinaison de 0°.

**17.** Roue (1) dentée suivant l'une des revendications précédentes,
**caractérisée en ce que** l'angle (W) d'inclinaison est plus grand que 0° et plus petit que 25° environ, en allant de préférence d'environ 10° à 20° et en étant en particulier d'environ 15°.

Fig.1

Fig.2

Fig.3

R  1  242  244

212b

212a  Fig.4

230  218  270  242  220

R

240  244  Fig.5

Fig.6

Fig.7

Fig.8b

Fig.8a

Fig.9b

Fig.9a

Fig.10b

Fig.10a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017201383 A1
- DE 20222502 U1
- US 20020029648 A1
- US 6070484 A

- DE 102016104915 A1
- US 2017166239 A1
- US 2018180155 A1
- US 2015047448 A1